# EUROPÄISCHE PATENTSCHRIFT

(11) **EP 4 438 267 B1**
(45) Veröffentlichungstag und Bekanntmachung des Hinweises auf die Patenterteilung: **12.02.2025**
(21) Anmeldenummer: 23165576.2
(22) Anmeldetag: 30.03.2023
(51) Int. Cl.: H04B 1/3888, B29C 63/00, B32B 37/00, B29C 63/02

(54) **VERPACKUNG MIT EINER BILDSCHIRMSCHUTZSCHICHT UND VERFAHREN ZUM AUFBRINGEN DER BILDSCHIRMSCHUTZSCHICHT AUF DEN BILDSCHIRM EINES MOBILEN ENDGERÄTES MITTELS EINER DERARTIGEN VERPACKUNG**
PACKAGE COMPRISING A SCREEN PROTECTIVE LAYER AND METHOD OF APPLYING THE SCREEN PROTECTIVE LAYER TO THE SCREEN OF A MOBILE TERMINAL BY MEANS OF SUCH A PACKAGE
EMBALLAGE COMPRENANT UNE COUCHE DE PROTECTION D'ÉCRAN ET PROCÉDÉ D'APPLICATION DE LA COUCHE DE PROTECTION D'ÉCRAN SUR L'ÉCRAN D'UN TERMINAL MOBILE AU MOYEN D'UN TEL EMBALLAGE

(43) Veröffentlichungstag der Anmeldung: 02.10.2024
(73) Patentinhaber: Dojan, Daniel, 32257 Bünde (DE)
(72) Erfinder: Dojan, Daniel, 32257 Bünde (DE)
(74) Vertreter: Dr. Binder & Binder GbR

(56) Entgegenhaltungen:
- WO-A2-2012/141505
- US-A1- 2019 149 183
- US-A1- 2023 002 105
- US-B1- 10 336 048
- US-B1- 8 517 367
- US-B2- 10 688 712

## Beschreibung

Die Erfindung betrifft eine Verpackung mit einer Bildschirmschutzschicht sowie ein Verfahren zum Aufbringen der Bildschirmschutzschicht auf den Bildschirm eines mobilen Endgerätes mittels einer derartigen Verpackung.

Die CN 103 935 548 A offenbart bereits einen Aufnahmerahmen mit einem Boden, an dem an allen vier Ecken jeweils ein Vorsprung angeordnet ist, welcher die jeweilige Ecke des Mobilgerätes umgreift. Innerhalb der Vorsprünge ist an dem Boden je eine Erhebung vorgesehen, wobei die Höhe der Erhebung der Dicke einer aufzubringenden Bildschirmschutzschicht entspricht. Auf die eingelegte Bildschirmschutzschicht wird das Mobiltelefon mit dem auf die Bildschirmschutzschicht gerichteten Display lagegenau positioniert. In dem Boden ist ferner ein Durchbruch vorhanden, so dass die Bildschirmschutzschicht von der gegenüberliegenden Seite des Mobiltelefons auf das Display aufgedrückt werden kann.

Aus der CN 203 819 765 U ist eine Hilfsvorrichtung in Form eines Rahmens zum Aufbringen einer Bildschirmschutzschicht auf ein Mobiltelefon bekannt, mit einer eine Ausnehmung für ein Mobiltelefon aufweisenden Box. An einer Längsseite der Box ist ein Deckel schwenkbar angeordnet. Der Deckel kann an der Box über eine magnetische Verbindung in der geschlossenen Lage positioniert und fixiert werden. In dem Deckel ist darüber hinaus eine Ausnehmung zur Aufnahme einer Bildschirmschutzschicht vorgesehen. Wenn das Mobiltelefon und die Bildschirmschutzschicht in die passenden Ausnehmungen eingelegt sind, wird der Deckel auf die Box geklappt, so dass die Bildschirmschutzschicht auf das Display angebracht werden kann.

Die WO 2012/141505 A1 betrifft schließlich eine Hilfsvorrichtung in Form eines Rahmens zum Aufbringen einer Bildschirmschutzschicht auf ein Display eines Mobiltelefons als Beispiel für ein mobiles Endgerät. Dabei ist eine Aufnahmevorrichtung mit einer zweistufigen Vertiefung vorgesehen. In eine untere Vertiefung wird die Bildschirmschutzschicht eingelegt, wobei ein Teil der Abdeckfolie zuvor von der Bildschirmschutzschicht entfernt wurde. Anschließend wird das Mobiltelefon mit dem Display nach unten auf die Bildschirmschutzschicht gelegt, so dass das Mobiltelefon genau zur Bildschirmschutzschicht positioniert ist. Der Boden der Aufnahmevorrichtung ist elastisch ausgeführt beziehungsweise weist eine Öffnung auf, so dass die Bildschirmschutzschicht mittig auf das Display gedrückt werden kann. Das Mobiltelefon wird anschließend aus der Aufnahmevorrichtung entnommen, so dass die verbleibenden Abschnitte der Abdeckfolie entfernt werden können und die Bildschirmschutzschicht vollständig aufgebracht werden kann.

Aus der US 8 517 367 B1 ist eine Verpackung mit einer Hülle und einem Einsatz mit einem elastisch verformbaren Boden bekannt.

Als weiteren Stand der Technik wird auf die Druckschriften US 10 688 712 B2, US 2019 / 149183 A1, US 2023 / 002105 A1 und US 10 336 048 B1 verwiesen.

Bislang ist es üblich, Verpackungen einer Bildschirmschutzschicht vollständig aus Kunststoffen herzustellen, da diese einen sehr guten mechanischen und Feuchtigkeitsschutz bieten, sodass dadurch Beschädigungen beim Transport beziehungsweise während der Lieferung an den Käufer vermieden werden. Nachteilig ist dabei allerdings, dass nach der Lieferung eine derartige Kunststoffverpackung aufwendig entsorgt werden muss und durch den zum Einsatz kommenden Kunststoff verhältnismäßig hohe Materialaufwendungen und damit Kosten entstehen, wobei insbesondere die Vermeidung von Kunststoffen aus Gründen des Umweltschutzes erforderlich und sinnvoll ist. Die bisher bekannten Verpackungen ermöglichen durch die darin einsetzbaren Bildschirmschutzschichten durchaus eine korrekte Aufbringung der Bildschirmschutzschicht auf den berührungsempfindlichen Bildschirm, also auf das Display eines mobilen Endgerätes.

Der Erfindung liegt jedoch die Aufgabe zugrunde, eine Verpackung bereitzustellen, die einen einfacheren Aufbau aufweist, als bekannte Ausführungen und neben der Möglichkeit der Aufbringung einer mitgelieferten Bildschirmschutzschicht auf den berührungsempfindlichen Bildschirm eines mobilen Endgerätes umweltfreundlich und auf einfache Weise entsorgt werden kann. Darüber hinaus ist ein Verfahren anzugeben, wie eine Bildschirmschutzschicht auf den berührungsempfindlichen Bildschirm eines mobilen Endgerätes mit einer derartigen Verpackung aufgebracht werden kann.

Die Erfindung löst diese Aufgabenstellung mit den Merkmalen der unabhängigen Patentansprüche 1 und 12.

Weitere Ausgestaltungen der Erfindung sind Gegenstand der sich jeweils anschließenden Unteransprüche.

Eine Verpackung, umfassend eine Hülle und mindestens einen Einsatz, wobei die Hülle zur geschützten Aufnahme des mindestens eines Einsatzes dient, und wobei ein Boden des Einsatzes über einen Rahmen verfügt, der einen Ausschnitt aufweist, in den ein mobiles Endgerät passgenau einsetzbar ist, sodass eine Außenoberfläche des in den Ausschnitt eingesetzten Endgerätes bündig mit einer Außenoberfläche des Rahmens abschließt, wobei die Verpackung insgesamt aus einem verdichteten oder durch ein Bindemittel verfestigten Naturmaterial besteht und in den das Endgerät aufnehmenden Ausschnitt eine Bildschirmschutzschicht mit einer im Lieferzustand die Bildschirmschutzschicht bedeckenden Abdeckfolie eingesetzt ist, wurde erfindungsgemäß dahingehend weitergebildet, dass der mindestens eine Einsatz mindestens einen Perforationsabschnitt zur Bildung einer Öffnung im Boden aufweist.

Durch die konsequente Verwendung eines verdichteten oder durch ein Bindemittel verfestigten Naturmaterials als Werkstoff für die Verpackung wird der Einsatz von Kunststoffen verhindert, was insgesamt zu einer einfachen Ausführung der erfindungsgemäßen Verpackung führt, die zudem kostengünstiger ist, als eine Kunststoffverpackung. Ein weiterer, sehr wesentlicher Vorteil besteht vorliegend darin, dass die Entsorgung einer Verpackung aus verdichtetem oder durch ein Bindemittel verfestigtem Naturmaterial einfacher und umweltschonender ist, als bei Kunststoffverpackungen. Als Naturmaterialien können dabei zum Beispiel Fasern von Pflanzen, wie Gräsern, Stroh oder Heu sowie Holzfasern verwendet werden, sodass eine spezielle Ausgestaltung der Erfindung darin besteht, dass die Verpackung insgesamt aus Pappe oder aus einem verdichteten Papier hergestellt ist. Die genannten Naturmaterialien können auf einfache Weise im Bioabfall kompostiert oder im Altpapier entsorgt werden. Eine Verbrennung ist ebenfalls möglich, ohne dass dadurch Schadstoffe freigesetzt werden. Aus dem Naturmaterial und dem gegebenenfalls zum Einsatz kommenden Bindemittel wird dabei zum Beispiel durch Zufuhr von Wasser eine Pulpe hergestellt, die in einer geeigneten Form verpresst und anschließend getrocknet wird und dadurch die für den vorliegenden Anwendungsfall erforderliche Festigkeit erhält. Die Ausführung der erfindungsgemäßen Verpackung erlaubt zudem durch die Hinzufügung einer Bildschirmschutzschicht auf einfache Weise, eine derartige Bildschirmschutzschicht auf die Oberfläche des berührungsempfindlichen Bildschirms aufzubringen.

Gemäß einer weiteren Ausgestaltung der Erfindung wird vorgeschlagen, dass der in die Hülle eingesetzte Einsatz zumindest teilweise aus Wellpappe besteht und eine ebene Außenoberfläche aufweist. Die Verwendung von Wellpappe hat den maßgeblichen Vorteil, dass dadurch die Verpackung insgesamt sehr stabil wird und durch die vorhandenen Hohlräume lediglich ein sehr geringes Gewicht aufweist. Das geringe Gewicht erleichtert dabei den Transport und die Handhabung der Verpackung wesentlich. Die ebene Außenoberfläche des Einsatzes ermöglicht es zudem, den Einsatz als Einheit mit einem darin aufgenommenen mobilen Endgerät in die Hülle einzusetzen.

Da mobile Endgeräte teilweise über ihren Außenumfang hervorstehende Tasten für die Bedienung des Endgerätes aufweisen, ist es von besonderem Vorteil, wenn entsprechend einer weiterbildenden Maßnahme der Erfindung in den Rahmen mindestens eine Ausbuchtung oder wenigstens eine Ausnehmung eingebracht ist, die die hervorstehenden Tasten des mobilen Endgerätes aufnimmt und auch dazu dient, die Entnahme des Endgeräts aus dem Rahmen zu erleichtern. Daher geht dieser Lösungsvorschlag dahin, die Ausbuchtungen so zu gestalten, dass möglichst beide Funktionen umsetzbar sind und dadurch die Anzahl der vorhandenen Ausbuchtungen in dem Rahmen auf ein Mindestmaß beschränkt werden kann. Mit anderen Worten werden die Ausbuchtungen im Bereich der Tasten des mobilen Endgerätes vorgesehen und mit einer Größe ausgestattet, die zusätzlich das Eingreifen von Hand ermöglicht, um das mobile Endgerät problemlos aus dem Rahmen entnehmen zu können.

Bildschirmschutzschichten zur Aufbringung auf einen berührungsempfindlichen Bildschirm eines mobilen Endgerätes weisen eine Oberfläche auf, die entweder eine Klebeschicht ist, wie dies erfindungsgemäß bevorzugt wird, oder über physikalische Adhäsionskräfte verfügt, das heißt, die Bildschirmschutzschicht saugt sich am Display an, ohne jeglichen Einsatz von Klebern oder Klebstoffen. Beim Entfernen der Folie vom Display bleiben bei der zuletzt genannten Variante keinerlei Rückstände auf dem Bildschirm zurück, sodass diese Verbindung zwischen Bildschirmschutzschicht und Bildschirm vorteilhaft ist. Um eine zufällige und nicht lagegenaue Verbindung zwischen der Bildschirmschutzschicht und dem berührungsempfindlichen Bildschirm eines in die Verpackung eingesetzten mobilen Endgerätes zu vermeiden, ist die Bildschirmschutzschicht mit einer Abdeckfolie versehen. Entsprechend einer vorteilhaften Ausgestaltung der Erfindung wird zur Erleichterung der Entfernung der Abdeckfolie vorgeschlagen, dass auf der frei zugänglichen Außenseite der Abdeckfolie der Bildschirmschutzschicht ein zumindest einseitig loser Aufkleber oder eine Lasche zum Abziehen der Abdeckfolie aufgebracht ist. Der Anwender kann somit den einseitig losen Aufkleber beziehungsweise die Lasche mit den Fingern erfassen und anschließend die Abdeckfolie problemlos von der Bildschirmschutzschicht abziehen, bevor der Bildschirm mit der Bildschirmschutzschicht in gewünschter Weise in Verbindung gebracht wird.

Um eine möglichst einfache Verbindung zwischen Bildschirmschutzschicht und berührungsempfindlichem Bildschirm zu ermöglichen, ist es von Vorteil, wenn der mindestens eine Perforationsabschnitt im Boden des Einsatzes sich abschnittsweise oder über den gesamten Ausschnitt des Rahmens erstreckt. Je größer der Perforationsabschnitt ist, desto einfacher lässt sich die Bildschirmschutzschicht aus dem Einsatz entfernen beziehungsweise mit dem Bildschirm verbinden oder lassen sich bereits in diesem Arbeitsschritt die möglicherweise vorhandenen Luftblasen zwischen der Bildschirmoberfläche und der Bildschirmschutzschicht während der Aufbringung der Bildschirmschutzschicht ausstreichen.

Da die Bildschirmschutzschicht erfindungsgemäß bereits in der Verpackung angeordnet ist und das mobile Endgerät oberhalb der Bildschirmschutzschicht in die Verpackung eingesetzt wird, entspricht es einer weiterführenden Maßnahme der Erfindung, dass der Boden und der Rahmen zwei übereinander angeordnete und stoffschlüssig miteinander verbundene Einzelelemente aus dem Naturmaterial, insbesondere aus Pappe sind. Dabei geht der Erfindungsgedanke dieses Vorschlages dahin, dass der Rahmen in besonders bevorzugter Weise aus zwei stoffschlüssig miteinander verbundenen Schichten besteht, wobei die bodennahe, untere Schicht der Stärke der Bildschirmschutzschicht entspricht. Mit diesem Lösungsvorschlag kann erreicht werden, dass die Außenoberfläche des mobilen Endgerätes bündig mit der Außenoberfläche des Einsatzes abschließt und dieser dadurch problemlos in die den Einsatz aufnehmenden Hülle eingesetzt oder eingeführt werden kann.

Dabei entspricht es einer speziellen Ausgestaltung der Erfindung, dass der aus Boden und Rahmen gebildete Einsatz in die mit einer Einführöffnung ausgestattete Hülle eingeschoben ist. Die Hülle verfügt bei diesem Lösungsvorschlag über eine einzige Öffnung, die beispielsweise stirnseitig oder auch an einer der Längsseiten der Hülle vorgesehen werden kann und der Aufnahme des kompletten Einsatzes dient. Eine alternative Ausführungsvariante hierzu kann in einer zweiteiligen Hülle bestehen, die ein Unterteil mit einem schwenkbar daran befestigten Deckel aufweist. Beide Lösungen sind dabei als gleichwertig anzusehen.

In jedem Fall ist es von Vorteil, die Hülle an ihrer Öffnungsseite mit einer Eingriffsmulde oder Ausnehmung auszustatten, um dadurch die Entnahme des Einsatzes zu erleichtern. Bei einer Ausführungsvariante mit einem Deckel wird diese Eingriffsmulde oder Ausnehmung in den Deckel eingebracht oder eine geeignete Lasche an dem Deckel vorgesehen, wobei für den Fall, dass die Hülle bis auf eine Einführöffnung allseitig geschlossen ist, eine derartige Ausnehmung oder Eingriffsmulde im Bereich der Einführöffnung vorhanden ist.

Bei der Bildschirmschutzschicht handelt es sich um eine Schutzfolie oder ein Schutzglas, wobei das Schutzglas zumeist ein Polyacrylwerkstoff oder Plexiglas ist.

Das erfindungsgemäße Verfahren zum Aufbringen einer Bildschirmschutzschicht auf den Bildschirm eines mobilen Endgerätes mittels einer zuvor beschriebenen Verpackung ist gekennzeichnet durch die Verfahrensschritte:
- Entnahme des Einsatzes aus der Hülle,
- Abziehen der Abdeckfolie von der Bildschirmschutzschicht mit Hilfe des Aufklebers oder der Lasche,
- Einsetzen des Endgerätes in den passgenau ausgeführten Ausschnitt des Einsatzes, sodass die Bildschirmschutzschicht an dem Bildschirm zur Anlage gelangt, und
- Entfernen des mindestens einen Perforationsabschnittes aus dem Boden, damit sich die Bildschirmschutzschicht bei der Entnahme des mobilen Endgerätes aus der Verpackung löst.

Das Verfahren ist von maßgeblichem Vorteil, weil mit der Verpackung gleichzeitig auch eine Bildschirmschutzschicht zur Verfügung gestellt wird und das mobile Endgerät lagegenau in dieser Verpackung positioniert werden kann, um die darin aufgenommene Bildschirmschutzschicht nach Entfernung der Abdeckfolie optimal auf den Bildschirm des mobilen Endgerätes aufzubringen. Die Aufbringung gestaltet sich dabei sehr einfach, da der Boden entweder verformbar ausgeführt ist beziehungsweise den erfindungsgemäßen Perforationsabschnitt aufweist, durch dessen Entfernung eine hinreichend große Öffnung entsteht, die geeignet ist, das mobile Endgerät mit seiner Bildschirmseite an die Bildschirmschutzschicht anzupressen und die Bildschirmschutzschicht mit dem mobilen Endgerät aus dem Einsatz zu entnehmen.

Durch Entfernen des mindestens einen Perforationsabschnittes aus dem Boden entsteht gemäß einer speziellen Ausgestaltung des Verfahrens eine Öffnung im Boden des Einsatzes, durch die das Endgerät an die Bildschirmschutzschicht angedrückt werden kann.

Nach dem Anlegen der Bildschirmschutzschicht wird entsprechend einer Ausgestaltung des Verfahrens das Endgerät aus dem Einsatz entnommen und die Bildschirmschutzschicht abschließend glattgestrichen, um eventuell noch vorhandene Luftblasen unter der Bildschirmschutzschicht zu entfernen.

Wie dies bereits mehrfach ausgeführt wurde, besteht der wesentliche Vorteil der zum Einsatz kommenden Verpackung aus Naturmaterial, insbesondere aus Pappe, vorliegend darin, dass die gesamte Verpackung umweltschonend als Biomüll oder im Altpapier entsorgt werden kann oder verbrannt wird. Somit ist die Entsorgung rückstandsfrei möglich.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: den Einsatz einer Verpackung in einer räumlichen Ansicht,
- Figur 2:: den Einsatz einer Verpackung von der Bodenseite her betrachtet
und
- Figur 3:: die gesamte Verpackung in einer perspektivischen Ansicht mit eingeschobenem Einsatz.

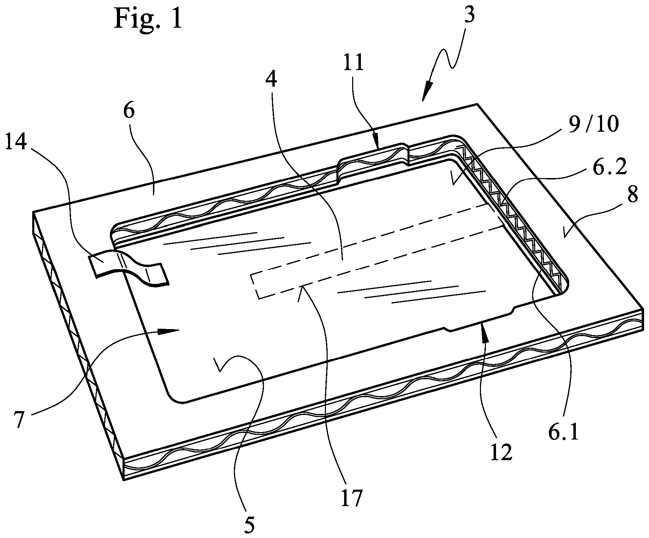

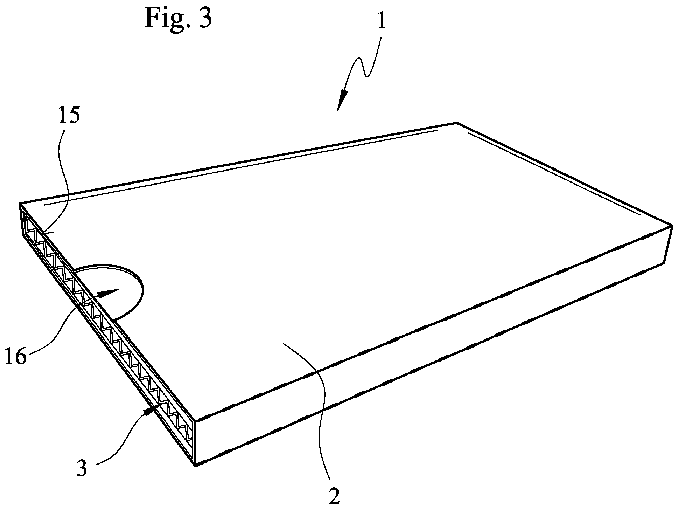

In der Figur 1 ist ein zur Aufnahme eines in der Figur 1 nicht gezeigten, mobilen Endgerätes geeigneter Einsatz 3 in einer räumlichen Ansicht dargestellt. Der bei dem dargestellten Beispiel insgesamt aus Pappe bestehende Einsatz 3 wird in eine Hülle 2 eingeführt, wie dies anschaulicher aus der Darstellung in Figur 3 hervorgeht und bildet damit einen wesentlichen Teil einer Verpackung 1. Der Einsatz 3 weist einen Boden 5 auf, der bei dem in Figur 1 gezeigten Beispiel mit einem Rahmen 6 aus Wellpappe ausgestattet ist, der seinerseits über einen Ausschnitt 7 verfügt, welcher passgenau zu dem darin einzusetzenden, mobilen Endgerät ausgeführt ist. Zur Erleichterung der Entnahme eines in den Ausschnitt 7 eingesetzten, mobilen Endgerätes verfügt der Rahmen 6 über seitliche Ausbuchtungen 11 und 12, die im Bereich der an dem mobilen Endgerät vorhandenen Tasten angeordnet sind. In den Rahmen 6 des in Figur 1 gezeigten Einsatzes 3 ist darüber hinaus eine Bildschirmschutzschicht 9 eingebettet, deren später dem berührungsempfindlichen Bildschirm des mobilen Endgerätes zugewandte Oberseite mit einer Abdeckfolie 10 versehen ist. Der Rahmen 6 besteht seinerseits aus zwei stoffschlüssig miteinander verbundenen, übereinander angeordneten Schichten 6.1 und 6.2, von denen zumindest die obere Schicht 6.2 aus Wellpappe gebildet ist. Die Besonderheit besteht vorliegend darin, dass die untere, bodennahe Schicht 6.1 der Materialstärke der Bildschirmschutzschicht 9 und die darüber angeordnete Schicht 6.2 der Stärke des in den Einsatz 3 einzusetzenden mobilen Endgerätes entspricht. Dies hat zur Folge, dass bei in den Einsatz 3 eingesetztem mobilen Endgerät die Oberfläche des mobilen Endgerätes bündig mit der Außenoberfläche 8 des Rahmens 6 des Einsatzes 3 abschließt. Eine weitere Besonderheit ist vorliegend darin zu sehen, dass der Boden 5 des Einsatzes 3 über einen Perforationsabschnitt 4 verfügt, der zur Verbindung der Bildschirmschutzschicht 9 mit dem berührungsempfindlichen Bildschirm des mobilen Endgerätes oder zur Erleichterung des Entfernens der Bildschirmschutzschicht 9 aus dem Einsatz 3 aus dem Boden 5 entfernt werden kann. Hierfür ist der Perforationsabschnitt 4 umlaufend mit einer geeigneten Perforation 17 versehen, die den Boden 5 in diesem Bereich vollständig und in der gestrichelt dargestellten Weise durchtrennt. Zur Erleichterung der Entfernung der Abdeckfolie 10 von der Bildschirmschutzschicht 9 dient darüber hinaus ein Aufkleber 14, der mit einem Abschnitt mit der Abdeckfolie 10 verbunden ist und mit seinem freien Abschnitt von Hand erfasst werden kann. Das Verfahren zur Aufbringung einer Bildschirmschutzschicht 9 auf dem Bildschirm des mobilen Endgerätes gestaltet sich dabei wie nachfolgend beschrieben. Zunächst wird der Einsatz 3 aus der Hülle 2 entnommen. Anschließend kann die Abdeckfolie 10 mit Hilfe des vorhandenen Aufklebers 14 von der Bildschirmschutzschicht 9 entfernt werden. Wird anschließend das mobile Endgerät in den passgenau hierzu ausgeführten Ausschnitt 7 des Einsatzes 3 eingelegt, gelangt zwangsläufig die Oberfläche der Bildschirmschutzschicht 9 mit dem Bildschirm des mobilen Endgerätes in Kontakt und verbindet sich aufgrund der vorhandenen Klebeschicht oder durch die Adhäsionskräfte mit der Oberfläche des Bildschirmes des mobilen Endgerätes. Vom Anwender der Verpackung 1 wird nunmehr der Boden 5 in Richtung der Bildschirmschutzschicht 9 verformt, sodass sich der Bildschirm des mobilen Endgerätes an die Bildschirmschutzschicht 9 anlegt.

Durch Entfernung des Perforationsabschnittes 4 im Boden des Einsatzes 3 entsteht eine Öffnung, durch die das mobile Endgerät sich auf diese Weise an die Bildschirmschutzschicht 9 anschmiegt, wenn ein Druck auf die Rückseite des mobilen Endgerätes ausgeübt wird und mittels der die Entnahme der Bildschirmschutzschicht und des mobilen Endgerätes aus dem Einsatz 3 erleichtert ist.

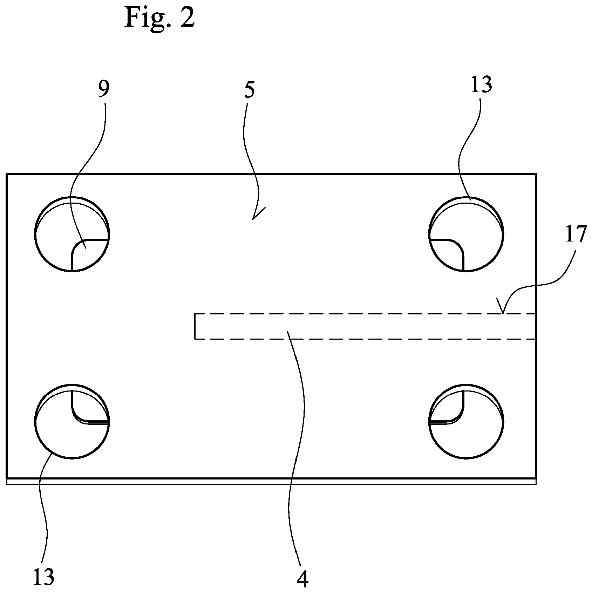

Die Figur 2 veranschaulicht den Einsatz 3 einer Verpackung 1 von der Bodenseite her betrachtet. Daraus wird noch einmal der Perforationsabschnitt 4 deutlich, der aus einer Perforierung 17 besteht, die die Möglichkeit schafft, den Boden 5 abschnittsweise zu öffnen, in dem der Perforationsabschnitt 4 entfernt wird. Bei der in Figur 2 gezeigten Ausführungsvariante sind darüber hinaus in den Boden insgesamt vier kreisförmige Ausnehmungen 13 eingebracht, die mit den Fingern durchgegriffen werden können, um dadurch die Entnahme des mobilen Endgerätes beziehungsweise des mit der Bildschirmschutzschicht 9 versehenen mobilen Endgerätes aus dem Einsatz 3 zu erleichtern. Andeutungsweise ist in der Darstellung der Figur 2 die Bildschirmschutzschicht 9 von ihrer Unterseite her sichtbar.

Aus der Figur 3 geht schließlich die Verpackung 1 insgesamt in einer perspektivischen Ansicht und mit dem darin eingeschobenen Einsatz 3 hervor. Die Verpackung 1 besteht demnach aus der Hülle 2, die bei dem dargestellten Beispiel lediglich einseitig eine Einführungsöffnung 15 aufweist, in die der Einsatz 3 eingeschoben wird. Zur Erleichterung der Entnahme des Einsatzes 3 aus der Hülle 2 weist die Hülle an der Seite der Einführungsöffnung 15 einseitig eine Eingriffsmulde 16 auf. Die gesamte Verpackung 1 besteht dabei aus Pappe, sodass diese problemlos entsorgt werden kann. Die Entsorgung kann dabei durch die Übergabe der gesamten Verpackung 1 in das Altpapier oder auf einfache Weise durch Verbrennung erfolgen.

### BEZUGSZEICHENLISTE:

- 1: Verpackung
- 2: Hülle
- 3: Einsatz
- 4: Perforationsabschnitt
- 5: Boden
- 6: Rahmen
- 6.1 6.2: erste Schicht zweite Schicht
- 7: Ausschnitt
- 8: Außenoberfläche (des Rahmens)
- 9: Bildschirmschutzschicht
- 10: Abdeckfolie
- 11: Ausbuchtung
- 12: Ausbuchtung
- 13: Ausnehmung
- 14: Aufkleber (Lasche)
- 15: Einführöffnung
- 16: Eingriffsmulde
- 17: Perforierung

## Patentansprüche

1. Verpackung (1), umfassend eine Hülle (2) und mindestens einen Einsatz (3), wobei die Hülle (2) zur geschützten Aufnahme des mindestens einen Einsatzes (3) dient, und wobei ein Boden (5) des Einsatzes (3) über einen Rahmen (6) verfügt, der einen Ausschnitt (7) aufweist, in den ein mobiles Endgerät passgenau einsetzbar ist, sodass eine Außenoberfläche des in den Ausschnitt (7) eingesetzten Endgerätes bündig mit einer Außenoberfläche (8) des Rahmens (6) abschließt, wobei
die Verpackung (1) insgesamt aus einem verdichteten oder durch ein Bindemittel verfestigten Naturmaterial besteht und in den für die Aufnahme des Endgerätes ausgeführten Ausschnitt (7) eine Bildschirmschutzschicht (9) mit einer im Lieferzustand die Bildschirmschutzschicht (9) bedeckenden Abdeckfolie (10) eingesetzt ist, **dadurch gekennzeichnet, dass**
der mindestens eine Einsatz (2) mindestens einen Perforationsabschnitt (4) zur Bildung einer Öffnung im Boden (5) aufweist.

2. Verpackung nach Anspruch 1,
**dadurch gekennzeichnet, dass**
die Verpackung (1) insgesamt aus verdichtetem Papier oder aus Pappe besteht.

3. Verpackung nach einem der vorstehend genannten Ansprüche,
**dadurch gekennzeichnet, dass**
der Einsatz (3) zumindest teilweise aus Wellpappe besteht und eine ebene Außenoberfläche aufweist.

4. Verpackung nach einem der vorstehend genannten Ansprüche,
**dadurch gekennzeichnet, dass**
in den Rahmen (6) mindestens eine Ausbuchtung (11, 12) oder in den Boden (5) wenigstens eine Ausnehmung (13) zur Erleichterung des Herausnehmens des Endgerätes aus dem Rahmen (6) eingebracht ist.

5. Verpackung nach einem der vorstehend genannten Ansprüche,
**dadurch gekennzeichnet, dass**
auf der Abdeckfolie (10) der Bildschirmschutzschicht (9) ein zumindest einseitig loser Aufkleber (14) oder eine Lasche zum Abziehen der Abdeckfolie (10) aufgebracht ist.

6. Verpackung nach einem der vorstehend genannten Ansprüche,
**dadurch gekennzeichnet, dass**
der mindestens eine Perforationsabschnitt (4) im Boden (5) des Einsatzes (3) sich abschnittsweise oder über den gesamten Ausschnitt (7) des Rahmens (6) erstreckt.

7. Verpackung nach einem der vorstehend genannten Ansprüche,
**dadurch gekennzeichnet, dass**
der Boden (5) und der Rahmen (6) mindestens zwei übereinander angeordnete und stoffschlüssig miteinander verbundene Einzelelemente aus dem Naturmaterial, insbesondere aus Pappe sind.

8. Verpackung nach einem der vorstehend genannten Ansprüche,
**dadurch gekennzeichnet, dass**
der Rahmen (6) aus zwei stoffschlüssig miteinander verbundenen Schichten (6.1, 6.2) besteht, wobei eine bodennahe, untere Schicht (6.1)
der Stärke der Bildschirmschutzschicht (9) entspricht und eine darüber angeordnete Schicht (6.2) aus Wellpappe besteht.

9. Verpackung nach einem der vorstehend genannten Ansprüche,
**dadurch gekennzeichnet, dass**
der aus Boden (5) und Rahmen (6) gebildete Einsatz (3) in die mit einer Einführöffnung (15) ausgestatteten Hülle (2) eingeschoben ist.

10. Verpackung nach einem der vorstehend genannten Ansprüche,
**dadurch gekennzeichnet, dass**
der aus Boden (5) und Rahmen (6) gebildete Einsatz (3) in die mit einem verschließbaren Deckel ausgestattete Hülle (2) eingesetzt ist.

11. Verpackung nach Anspruch 9,
**dadurch gekennzeichnet, dass**
die Hülle (2) an der Seite der Einführöffnung (15) eine Eingriffsmulde (16) oder Ausnehmung zur Erleichterung der Entnahme des Einsatzes (3) oder an dem Deckel eine Lasche aufweist.

12. Verfahren zum Aufbringen einer Bildschirmschutzschicht (9) auf den Bildschirm eines mobilen Endgerätes mittels einer Verpackung (1) nach einem der vorstehend genannten Ansprüche, aber mit mindestens den Merkmalen des Anspruchs 5, **gekennzeichnet durch** die Verfahrensschritte:
- Entnahme des Einsatzes (3) aus der Hülle (2),
- Abziehen der Abdeckfolie (10) von der Bildschirmschutzschicht (9) mit Hilfe des Aufklebers (14) oder der Lasche,
- Einsetzen des Endgerätes in den passgenau ausgeführten Ausschnitt (7) des Einsatzes (3), sodass die Bildschirmschutzschicht (9) an dem Bildschirm zur Anlage gelangt, und
- Entfernen des mindestens einen Perforationsabschnittes (4) aus dem Boden (5), damit sich die Bildschirmschutzschicht (9) bei der Entnahme des mobilen Endgerätes aus der Verpackung löst.

13. Verfahren nach Anspruch 12,
**dadurch gekennzeichnet, dass**
durch Entfernen des mindestens einen Perforationsabschnittes (4) aus dem Boden (5) eine Öffnung im Boden (5) des Einsatzes (3) entsteht, durch die das Endgerät an die Bildschirmschutzschicht (9) angedrückt wird.

14. Verfahren nach Anspruch 12 oder 13,
**dadurch gekennzeichnet, dass**
nach dem Anlegen der Bildschirmschutzschicht (9) das Endgerät aus dem Einsatz (3) entnommen wird und die Bildschirmschutzschicht (9) abschließend glattgestrichen wird, um eventuell vorhandene Luftblasen unter der Bildschirmschutzschicht (9) zu entfernen.

15. Verfahren nach einem der Ansprüche 12 bis 14,
**dadurch gekennzeichnet, dass**
die gesamte Verpackung (1) umweltschonend als Biomüll oder im Altpapier entsorgt oder verbrannt wird.

## Claims

1. Packaging (1) comprising a sleeve (2) and at least one insert (3), wherein the sleeve (2) serves to receive the at least one insert (3) in protected fashion, and wherein a bottom (5) of the insert (3) has a frame (6) which has a cutout (7) into which a mobile terminal can be accurately fitted, with the result that an outer surface of the terminal inserted in the cutout (7) terminates flush with an outer surface (8) of the frame (6), wherein
the packaging (1) overall consists of a natural material which is consolidated by a binder or compacted, and the cutout (7) designed to receive the terminal contains a screen protection layer (9) with a covering film (10) that covers the screen protection layer (9) in the as-delivered state,
**characterized in that**
the at least one insert (2) has at least one perforated portion (4) for forming an opening in the bottom (5).

2. Packaging according to Claim 1, **characterized in that** the packaging (1) overall consists of compacted paper or of cardboard.

3. Packaging according to either of the preceding claims, **characterized in that** the insert (3) at least partially consists of corrugated cardboard and has a flat outer surface.

4. Packaging according to one of the preceding claims, **characterized in that** introduced in the frame (6) is at least one indentation (11, 12), or introduced in the bottom (5) is at least one aperture (13) for making it easier to take the terminal out of the frame (6).

5. Packaging according to one of the preceding claims, **characterized in that** applied to the covering film (10) of the screen protection layer (9) is a sticker (14) which is not fixed on at least one side or a tab for pulling off the covering film (10).

6. Packaging according to one of the preceding claims, **characterized in that** the at least one perforated portion (4) in the bottom (5) of the insert (3) extends at least in certain portions or over the entire cutout (7) of the frame (6).

7. Packaging according to one of the preceding claims, **characterized in that** the bottom (5) and the frame (6) are at least two individual elements which are arranged one on top of the other, integrally bonded to one another and made of the natural material, in particular of cardboard.

8. Packaging according to one of the preceding claims, **characterized in that** the frame (6) consists of two layers (6.1, 6.2) integrally bonded to one another, wherein a lower layer (6.1) close to the bottom corresponds to the thickness of the screen protection layer (9) and a layer (6.2) arranged on top thereof consists of corrugated cardboard.

9. Packaging according to one of the preceding claims, **characterized in that** the insert (3) formed of the bottom (5) and the frame (6) is slid in the sleeve (2) equipped with an insertion opening (15).

10. Packaging according to one of the preceding claims, **characterized in that** the insert (3) formed of the bottom (5) and the frame (6) is inserted in the sleeve (2) equipped with a closeable lid.

11. Packaging according to Claim 9, **characterized in that** the sleeve (2) on the side of the insertion opening (15) has a grip recess (16) or aperture for making it easier to withdraw the insert (3), or on the lid has a tab.

12. Method for applying a screen protection layer (9) to the screen of a mobile terminal by means of a packaging (1) according to one of the preceding claims, but having at least the features of Claim 5, **characterized by** the method steps of:
- withdrawing the insert (3) from the sleeve (2),
- peeling the covering film (10) off of the screen protection layer (9) by means of the sticker (14) or the tab,
- inserting the terminal into the accurately fitting cutout (7) of the insert (3), with the result that the screen protection layer (9) comes into contact with the screen, and
- removing the at least one perforated portion (4) from the bottom (5) in order that the screen protection layer (9) detaches when the mobile terminal is withdrawn from the packaging.

13. Method according to Claim 12, **characterized in that** removing the at least one perforated portion (4) from the bottom (5) produces an opening in the bottom (5) of the insert (3), and the terminal is pressed against the screen protection layer (9) through this opening.

14. Method according to Claim 12 or 13, **characterized in that**, after the screen protection layer (9) has been placed on, the terminal is withdrawn from the insert (3) and the screen protection layer (9) is finally smoothed out, in order to remove any air bubbles under the screen protection layer (9).

15. Method according to one of Claims 12 to 14, **characterized in that** the entire packaging (1) is disposed of or combusted as organic waste or waste paper in an environmentally friendly fashion.

## Revendications

1. Emballage (1), comprenant un étui (2) et au moins un insert (3), l'étui (2) servant à recevoir de façon protégée ledit au moins un insert (3), et dans lequel le fond (5) de l'insert (3) dispose d'un cadre (6) qui présente une découpe (7) dans laquelle un terminal mobile peut être inséré sur mesure de sorte qu'une surface extérieure du terminal inséré dans la découpe (7) termine à fleur avec une surface extérieure (8) du cadre (6), dans lequel
l'emballage (1) est composé globalement d'un matériau naturel compacté ou solidifié par un liant, et une couche de protection d'écran (9) avec un film de recouvrement (10) couvrant la couche de protection d'écran (9) à l'état de livraison est insérée dans la découpe (7) réalisée pour recevoir le terminal,
**caractérisé en ce que**
ledit au moins un insert (2) présente au moins une partie de perforation (4) pour former une ouverture dans le fond (5).

2. Emballage selon la revendication 1, **caractérisé en ce que** l'emballage (1) est globalement composé de papier compacté ou de carton.

3. Emballage selon l'une quelconque des revendications précédentes, **caractérisé en ce que** l'insert (3) est composé au moins partiellement de carton ondulé et présente une surface extérieure plane.

4. Emballage selon l'une quelconque des revendications précédentes, **caractérisé en ce que** au moins une échancrure (11, 12) est pratiquée dans le cadre (6), ou au moins un évidement (13) est pratiqué dans le fond (5) pour faciliter le retrait du terminal du cadre (6).

5. Emballage selon l'une quelconque des revendications précédentes, **caractérisé en ce que** un autocollant (14) séparé au moins d'un côté ou une languette pour enlever le film de recouvrement (10) est appliqué(e) sur le film de recouvrement (10) de la couche de protection d'écran (9).

6. Emballage selon l'une quelconque des revendications précédentes, **caractérisé en ce que** ladite au moins une portion de perforation (4) dans le fond (5) de l'insert (3) s'étend localement ou sur toute la découpe (7) du cadre (6).

7. Emballage selon l'une quelconque des revendications précédentes, **caractérisé en ce que** le fond (5) et le cadre (6) sont au moins deux éléments individuels d'un matériau naturel, en particulier du carton, disposés l'un au-dessus de l'autre et reliés l'un à l'autre par liaison de matière.

8. Emballage selon l'une quelconque des revendications précédentes, **caractérisé en ce que** le cadre (6) est composé de deux couches (6.1, 6.2) reliées l'une à l'autre par liaison de matière, dans lequel une couche inférieure (6.1) proche du fond correspond à l'épaisseur de la couche de protection d'écran (9) et une couche (6.2) disposée au-dessus de celle-ci est composée de carton ondulé.

9. Emballage selon l'une quelconque des revendications précédentes, **caractérisé en ce que** l'insert (3) formé par le fond (5) et le cadre (6) est inséré dans l'étui (2) pourvu d'une ouverture d'introduction (15).

10. Emballage selon l'une quelconque des revendications précédentes, **caractérisé en ce que** l'insert (3) formé par le fond (5) et le cadre (6) est inséré dans l'étui (2) pourvu d'un couvercle pouvant être fermé.

11. Emballage selon la revendication 9, **caractérisé en ce que** l'étui (2) présente sur le côté de l'ouverture d'introduction (15) un creux de préhension (16) ou un évidement pour faciliter le retrait de l'insert (3) ou présente une languette au niveau du couvercle.

12. Procédé permettant d'appliquer une couche de protection d'écran (9) à l'écran d'un terminal mobile au moyen d'un emballage (1) selon l'une quelconque des revendications précédentes, mais ayant au moins les particularités de la revendication 5,
**caractérisé par** les étapes de procédé consistant à :
- retirer l'insert (3) de l'étui (2),
- enlever le film de recouvrement (10) de la couche de protection d'écran (9) à l'aide de l'autocollant (14) ou de la languette,
- insérer le terminal dans la découpe (7) réalisée sur mesure de l'insert (3) de sorte que la couche de protection d'écran (9) vient s'appliquer contre l'écran, et
- éliminer ladite au moins une portion de perforation (4) du fond (5) afin que la couche de protection d'écran (9) se détache de l'emballage lorsque le terminal mobile est retiré.

13. Procédé selon la revendication 12, **caractérisé en ce que** l'élimination de ladite au moins une portion de perforation (4) du fond (5) crée une ouverture dans le fond (5) de l'insert (3) à travers laquelle le terminal est plaqué contre la couche de protection d'écran (9).

14. Procédé selon la revendication 12 ou 13, **caractérisé en ce que** après l'application de la couche de protection d'écran (9), le terminal est retiré de l'insert (3) et la couche de protection d'écran (9) est enfin lissée afin d'éliminer des bulles d'air susceptibles de se trouver sous la couche de protection d'écran (9).

15. Procédé selon l'une quelconque des revendications 12 à 14, **caractérisé en ce que** l'emballage (1) tout entier est éliminé de façon écologique sous forme de déchets organiques ou avec le papier recyclé ou est brûlé.
